(19) Europäisches Patentamt
European Patent Office
Office européen des brevets

(11) **EP 2 718 011 B1**

(12) **EUROPÄISCHE PATENTSCHRIFT**

(45) Veröffentlichungstag und Bekanntmachung des Hinweises auf die Patenterteilung:
**27.02.2019   Patentblatt 2019/09**

(21) Anmeldenummer: **12725793.9**

(22) Anmeldetag: **06.06.2012**

(51) Int Cl.:
**B01J 29/83** (2006.01)       **B01J 29/85** (2006.01)
**B01D 53/94** (2006.01)       **B01J 29/78** (2006.01)

(86) Internationale Anmeldenummer:
**PCT/EP2012/060657**

(87) Internationale Veröffentlichungsnummer:
**WO 2012/168277 (13.12.2012 Gazette 2012/50)**

(54) **VERFAHREN ZUR SELEKTIVEN KATALYTISCHEN REDUKTION VON STICKOXIDEN IN ABGASEN VON DIESELMOTOREN**

PROCESS FOR THE SELECTIVE CATALYTIC REDUCTION OF NITROGEN OXIDES IN THE EXHAUST GASES OF DIESEL ENGINES

PROCÉDÉ POUR LA RÉDUCTION CATALYTIQUE SÉLECTIVE D'OXYDES D'AZOTE DANS LES GAZ D'ÉCHAPPEMENT DE MOTEURS DIESEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2011   EP 11004607**

(43) Veröffentlichungstag der Anmeldung:
**16.04.2014   Patentblatt 2014/16**

(73) Patentinhaber: **Umicore AG & Co. KG**
**63457 Hanau-Wolfgang (DE)**

(72) Erfinder:
• SEYLER, Michael
  63517 Rodenbach (DE)
• SOEGER, Nicola
  61130 Nidderau (DE)
• ADELMANN, Katja
  64297 Darmstadt (DE)
• SPURK, Paul
  64331 Weiterstadt (DE)

(56) Entgegenhaltungen:
EP-A1- 2 335 810          WO-A1-2008/049491
WO-A1-2011/131324       WO-A2-2008/051752
US-A1- 2003 073 566       US-B1- 6 468 941

EP 2 718 011 B1

**Beschreibung**

Die vorliegende Erfindung betrifft einen Katalysator zur selektiven katalytischen Reduktion von Stickoxiden in Abgasen von Dieselmotoren mit Ammoniak.

Das Abgas von Dieselmotoren enthält neben den aus einer unvollständigen Verbrennung des Kraftstoffs resultierenden Schadgasen Kohlenmonoxid (CO) und Kohlenwasserstoff (HC) Russpartikel (PM) und Stickoxide ($NO_x$). Außerdem enthält das Abgas von Dieselmotoren bis zu 15 Vol.-% Sauerstoff. Es ist bekannt, dass die oxidierbaren Schadgase CO und HC durch Überleiten über einen geeigneten Oxidationskatalysator in Kohlendioxid ($CO_2$) umgewandelt und Partikel durch Durchleiten des Abgases durch ein geeignetes Russpartikelfilter entfernt werden können.

Ein bekanntes Verfahren zur Entfernung von Stickoxiden aus Abgasen in Gegenwart von Sauerstoff ist das Verfahren der selektiven katalytischen Reduktion (SCR-Verfahren; Selective Catalytic Reduction) mittels Ammoniak an einem geeigneten Katalysator, dem SCR-Katalysator. Bei diesem Verfahren werden die aus dem Abgas zu entfernenden Stickoxide mit Ammoniak zu Stickstoff und Wasser umgesetzt. Das als Reduktionsmittel verwendete Ammoniak kann als Sekundäremission in der Abgasanlage erzeugt werden oder es wird durch Eindosierung einer Vorläuferverbindung, aus der Ammoniak gebildet werden kann, wie beispielsweise Harnstoff, Ammoniumcarbamat oder Ammoniumformiat, in den Abgasstrang und anschließende Hydrolyse verfügbar gemacht.

Zur Durchführung der letztgenannten Variation des SCR-Verfahrens sind eine Quelle zur Bereitstellung des Reduktionsmittels, eine Einspritzvorrichtung zur bedarfsgerechten Eindosierung des Reduktionsmittels in das Abgas und ein im Strömungsweg des Abgases angeordneter SCR-Katalysator notwendig. Die Gesamtheit aus Reduktionsmittelquelle, SCR-Katalysator und anströmseitig zum SCR-Katalysator angeordneter Einspritzvorrichtung wird auch als SCR-System bezeichnet.
Zur Reinigung der Dieselabgase in Kraftfahrzeugen wird das SCR-System zumeist in Kombination mit anderen Abgasreinigungsaggregaten wie Oxidationskatalysatoren und Dieselpartikelfilter eingesetzt. Daraus ergeben sich viele verschiedene Möglichkeiten der Abgassystemgestaltung. Je nach Einbauposition des SCR-Systems und insbesondere je nach Anordnung des SCR-Katalysators im Strömungsweg des Abgases werden unterschiedliche Anforderungen an dessen Leistungsfähigkeit und Alterungsstabilität gestellt. Folgerichtig ist im Stand der Technik eine Vielzahl von SCR-Katalysatoren beschrieben worden, die sich zur Verminderung des Stickoxid-Gehalts im Abgas von Dieselmotoren eignen und die zumeist entsprechend der spezifischen Anforderungen der jeweiligen Abgassystemkonfiguration optimiert sind.

Die Verwendung Zeolith-basierter SCR-Katalysatoren ist aus zahlreichen Publikationen bekannt. Beispielsweise beschreibt die US 4,961,917 eine Methode zur Reduktion von Stickoxiden mit Ammoniak unter Verwendung eines Katalysators, der neben einem Zeolith mit definierten Eigenschaften Eisen und/oder Kupfer als Promotor enthält. Weitere SCR-Katalysatoren auf der Basis Übergangsmetall-ausgetauschter Zeolithe und Verfahren zur selektiven katalytischen Reduktion unter Verwendung solcher SCR-Katalysatoren sind beispielsweise beschrieben in der EP 1 495 804 A1, der US 6,914,026 B2 oder der EP 1 147 801 B1.

Werden Zeolith-basierte SCR-Katalysatoren insbesondere in diskontinuierlich arbeitenden SCR-Systemen, in dem der als Reduktionsmittel verwendete Ammoniak ausschließlich als Sekundäremission in der Abgasanlage erzeugt wird, eingesetzt, so versucht man sie aufgrund ihrer hohen Herstellungspreise in Abgasreinigungsanlagen, in denen Ammoniak über eine Vorläuferverbindung kontinuierlich zugeführt wird, zu vermeiden.

Für die letztgenannten Systeme eignen sich SCR-Katalysatoren, die Vanadiumoxid neben Titandioxid oder Wolframoxid oder Mischungen davon enthalten. Beispielsweise beschreibt die EP 385 164 B1 einen solchen Katalysator, der neben Titandioxid mindestens ein Oxid von Wolfram, Silizium, Bor, Aluminium, Phosphor, Zirkonium, Barium, Yttrium, Lanthan oder Cer, sowie mindestens ein Oxid von Vanadium, Niob, Molybdän, Eisen oder Kupfer enthält und der als Formkörper durch Verpressung beziehungsweise Extrusion der Komponenten gegebenenfalls nach Zusatz geeigneter Hilfsstoffe hergestellt wird. Weitere Katalysatoren dieser Art sind beispielsweise aus EP 1 153 648 A1 und EP 246 859 A1 bekannt.

Ein wesentliches Problem bei der Verwendung der Vanadium-haltigen SCR-Katalysatoren zur Reinigung der Abgase von Kraftfahrzeugen ist die mögliche Emission von flüchtigen, toxischen Vanadiumverbindungen bei höheren Abgastemperaturen. Bemühungen, kostengünstige Vanadium-freie SCR-Katalysatoren zur Verfügung zu stellen, gibt es bereits seit längerem. So sind einige Mischoxid-Zusammensetzungen auf der Basis von Cer-Zirkon-Mischoxid und ihre Verwendung in der SCR-Reaktion im Stand der Technik bekannt. Diesbezüglich wird beispielsweise auf WO 2008/049491, WO 2008/051752, EP 2 116 293 A1 und, EP 2 072 120 A1 verwiesen.

Mit Seltenerdsesquioxiden ($SE_2O_3$) dotierte Cer-Zirkon-Mischoxide sind in US 6,468,941 B1 beschrieben, werden dort aber nicht zur Katalyse der selektiven katalytischen Reduktion von Stickoxiden verwendet, sondern als Sauerstoffionen leitende bzw. Sauerstoff speichernde Materialien in Dreiwegekatalysatoren.

Die US2003/073566 offenbart einen Zweiphasenkatalysator, der ein Molekularsieb mit einer Porengröße von nicht weniger als 4 Å, das ein Übergangsmetall trägt, sowie ein stabilisierendes Oxid umfasst. Während das Übergangsmetall zum Beispiel Kupfer sein kann, ist kommen als stabilisierendes Oxid zum Beispiel ein oder mehrere Oxide des Cers, Zirkoniums, Molybdäns, Vanadiums und Niobs in Frage.

Es ist Aufgabe der vorliegenden Erfindung, ein Verfahren zur selektiven katalytischen Reduktion von Stickoxiden in Dieselmotorenabgasen mit Ammoniak bereitzustellen, das sich insbesondere durch eine verbesserte Konvertierungsaktivität bei der Reduktion von $NO_x$ mit Ammoniak im Temperaturbereich von über 350°C bei zugleich hervorragender Selektivität zu Stickstoff auszeichnet. Im Bereich von unter 350°C, insbesondere im Tieftemperaturbereich zwischen 150 und 250°C sollen Aktivitätseinbußen im Vergleich zu herkömmlichen Verfahren nicht oder allenfalls in akzeptablem Umfang zu beobachten sein.

Es wurde nun überraschend gefunden, dass diese Aufgabe durch Kombination bestimmter Molsiebe mit bestimmten Mischoxiden in bestimmten Mengenverhältnissen gelöst wird.

Die vorliegende Erfindung betrifft somit ein Verfahren zur selektiven katalytischen Reduktion von Stickoxiden in Abgasen von Dieselmotoren, durch

- Hinzufügen von Ammoniak oder einer Vorläuferverbindung, aus der Ammoniak gebildet werden kann, aus einer vom Motor unabhängigen Quelle in das Stickoxide enthaltende, zu reinigende Abgas und

- Überleiten der in Schritt a.) erzeugten Mischung über einen Katalysator, dadurch gekennzeichnet, dass der Katalysator

a) ein Molsieb ausgewählt aus der Gruppe bestehend aus Chabazit, SAPO-34 und ALPO-34, das 1 bis 10 Gew.-% Kupfer, bezogen auf das Gesamtgewicht des Molsiebs enthält; und

b) ein Mischoxid, das aus

Oxiden des Cers, des Zirkons, des Niobs und eines oder mehrerer Seltenerdelemente oder aus
Oxiden des Cers, des Zirkons, des Niobs, des Wolframs und eines oder mehrerer Seltenerdelemente besteht;
enthält, wobei das Gewichtsverhältnis zwischen Molsieb und Mischoxid 3:1 bis 10:1 beträgt.

Bevorzugte Katalysatoren enthalten Molsiebe, die eine mittlere Porengröße von kleiner 4 Ångström (Å) aufweisen.

Weitere bevorzugte Katalysatoren enthalten als Molsieb ALPO-34. ALPO-34 ist ein zeolithanaloges Alumophosphat mit Chabazit-Struktur, das dem Fachmann ebenso wie Chabazit und SAPO-34 bekannt und im Handel erhältlich ist.

Bevorzugte Katalysatoren enthalten Mischoxide aus Ceroxid in einer Menge von 15 bis 50 Gew.-% berechnet als $CeO_2$, Nioboxid in einer Menge von 3 bis 25 Gew.-% berechnet als $Nb_2O_5$, Seltenerdoxid in einer Menge von 3 bis 10 Gew.-% berechnet als $SE_2O_3$ und Zirkonoxid in einer Menge von 15 bis 79 Gew.-% berechnet als $ZrO_2$.

Besonders bevorzugte Katalysatoren enthalten Mischoxide aus Ceroxid in einer Menge von 25 bis 45 Gew.-% berechnet als $CeO_2$, Nioboxid in einer Menge von 3 bis 20 Gew.-% berechnet als $Nb_2O_5$, Seltenerdoxid in einer Menge von 3 bis 10 Gew.-% berechnet als $SE_2O_3$ und Zirkonoxid in einer Menge von 25 bis 69 Gew.-% berechnet als $ZrO_2$,

Ganz besonders bevorzugte Katalysatoren enthalten Mischoxide aus Ceroxid in einer Menge von 35 bis 40 Gew.-% berechnet als $CeO_2$, Nioboxid in einer Menge von 10 bis 15 Gew.-% berechnet als $Nb_2O_5$, Seltenerdoxid in einer Menge von 3 bis 6 Gew.-% berechnet als $SE_2O_3$ und Zirkonoxid in einer Menge von 39 bis 52 Gew.-% berechnet als $ZrO_2$.

Sofern die Katalysatoren Wolframoxid-haltige Mischoxide enthalten, so setzen sich letztere bevorzugt aus Ceroxid in einer Menge von 15 bis 35 Gew.-% berechnet als $CeO_2$, Nioboxid in einer Menge von 3 bis 10 Gew.-% berechnet als $Nb_2O_5$, Seltenerdoxid in einer Menge von 3 bis 10 Gew.-% berechnet als $SE_2O_3$, Wolframoxid in einer Menge von 4 bis 25 Gew.-% berechnet als $WO_3$ und Zirkonoxid in einer Menge von 15 bis 60 Gew.-% berechnet als $ZrO_2$ zusammen.

Besonders bevorzugt setzen sich Wolframoxid-haltige Mischoxide aus Ceroxid in einer Menge von 20 bis 35 Gew.-% berechnet als $CeO_2$, Nioboxid in einer Menge von 4 bis 9 Gew.-% berechnet als $Nb_2O_5$, Seltenerdoxid in einer Menge von 3 bis 8 Gew.-% berechnet als $SE_2O_3$, Wolframoxid in einer Menge von 10 bis 20 Gew.-% berechnet als $WO_3$ und Zirkonoxid in einer Menge von 40 bis 55 Gew.-% berechnet als $ZrO_2$, zusammen.

Die Mengenangaben beziehen sich jeweils auf die Gesamtmenge des Mischoxids. SE steht für ein Seltenerdelement.

Weitere bevorzugte Katalysatoren enthalten Mischoxide aus 15 bis 50 Gew.-% $CeO_2$, 3 bis 25 Gew.-% $Nb_2O_5$, 3 bis 10 Gew.-% $SE_2O_3$ und 15 bis 79 Gew.-% $ZrO_2$.

Weitere besonders bevorzugte Katalysatoren enthalten Mischoxide aus 25 bis 45 Gew.-% $CeO_2$, 3 bis 20 Gew.-% $Nb_2O_5$, 3 bis 10 Gew.-% $SE_2O_3$ und 25 bis 69 Gew.-% $ZrO_2$.

Weitere ganz besonders bevorzugte Katalysatoren enthalten Mischoxide aus 35 bis 40 Gew.-% $CeO_2$, 10 bis 15 Gew.-% $Nb_2O_5$, 3 bis 6 Gew.-% $SE_2O_3$ und 39 bis 52 Gew.-% $ZrO_2$.

In weiteren bevorzugten Katalysatoren, die Wolfram-oxid-haltige Mischoxide enthalten, setzen sich letztere aus 15 bis 35 Gew.-% $CeO_2$, 3 bis 10 Gew.-% $Nb_2O_5$, 3 bis 10 Gew.-% $SE_2O_3$, 4 bis 25 Gew.-% $WO_3$ und 15 bis 60

Gew.-% ZrO$_2$ zusammen.

In weiteren besonders bevorzugten Katalysatoren, die Wolframoxid-haltige Mischoxide enthalten, setzen sich letztere aus 20 bis 35 Gew.-% CeO$_2$, 4 bis 9 Gew.-% Nb$_2$O$_5$, 3 bis 8 Gew.-% SE$_2$O$_3$, 10 bis 20 Gew.-% WO$_3$ und 40 bis 55 Gew.-% ZrO$_2$ zusammen.

Auch hier beziehen sich die Mengenangaben jeweils auf die Gesamtmenge des Mischoxids. SE steht für ein Seltenerdelement.

Bevorzugte Seltenerdelemente SE sind insbesondere Yttrium, Ytterbium, Lanthan, Praseodym, Neodym, Samarium, Terbium und Erbium.

Besonders bevorzugt sind Yttrium und Neodym, die insbesondere als Yttriumsesquioxid Y$_2$O$_3$ bzw. Neodymsesquioxid Nd$_2$O$_3$ eingesetzt werden.

Die Herstellung der Mischoxide kann mit einfachsten Mitteln erfolgen. So erhält man ein geeignetes Mischoxid beispielsweise durch Imprägnierung eines kommerziell erhältlichen Cer-Zirkon-Mischoxides, welches zur Stabilisierung mit Seltenerdoxid dotiert ist, mit einer wässrigen Lösung einer in Wasser löslichen Niobverbindung und gegebenenfalls einer in Wasser löslichen Wolframverbindung und anschließende Kalzination des so erhaltenen (feuchten) Pulvers. Aber auch andere, dem Fachmann bekannte Verfahren zur Herstellung der anspruchsgemäßen Mischoxide sind einsetzbar.

Das Gewichtsverhältnis zwischen Molsieb und Mischoxid beträgt insbesondere 3:1 bis 9:1.

In einer besonders vorteilhaften Ausführung der vorliegenden Erfindung liegt der Katalysator aus Molsieb und Mischoxid in Form mindestens einer Beschichtung auf einem katalytisch inerten Tragkörper vor. Als katalytisch inerte Tragkörper eignen sich grundsätzlich alle bekannten Tragkörper für Heterogenkatalysatoren. Bevorzugt sind monolithische und monolithähnliche Durchflußwabenkörper aus Keramik und Metall, sowie Partikelfiltersubstrate, wie sie üblicherweise zur Reinigung von Dieselmotorenabgasen eingesetzt werden. Ganz besonders bevorzugt sind keramische Durchflußwabenkörper und keramische Wandflußfiltersubstrate aus Cordierit, Aluminiumtitanat oder Siliziumcarbid. Molsieb und Mischoxid können auf dem Tragkörper in einer Schicht, das heißt in Mischung oder räumlich getrennt in verschiedenen Schichten vorliegen.

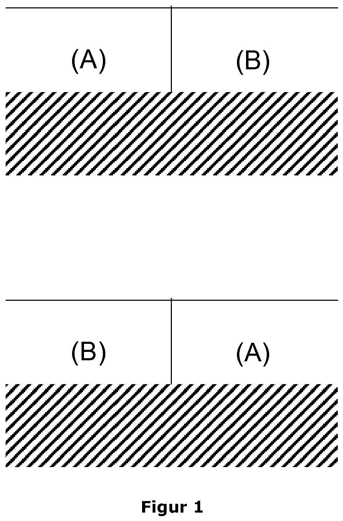

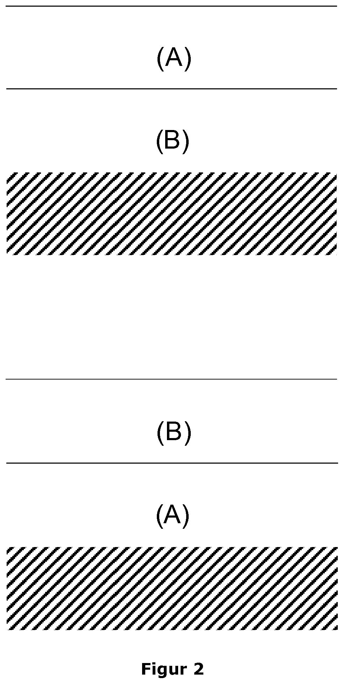

Je nach Zielanwendung kann es besonders vorteilhaft sein, so genannte "Zonenkatalysatoren" zu verwenden, in denen die katalytisch aktiven Beschichtungen als in Strömungsrichtung des Abgases horizontal aufeinander folgende Schichten (so genannte Zonen) auf dem Tragkörper ausgeführt sind (Figur 1). Es können jedoch auch so genannte "Schichtkatalysatoren" bevorzugt sein, in denen die katalytisch aktiven Beschichtungen als vertikal über die gesamte Länge des Tragkörpers übereinander liegende Schichten auf dem Tragkörper angeordnet sind (Figur 2).

In den Figuren 1 und 2 sind Ausführungsformen gezeigt, in denen (A) die Beschichtung ist, die das Mischoxid enthält, während (B) die davon räumlich getrennt aufgebrachte Beschichtung ist, die das Molsieb enthält.

In den Ausführungsformen entsprechend Figur 1a) und Figur 2a) kommt die Beschichtung, die das Mischoxid enthält, mit dem anströmenden Abgas zuerst in Kontakt, während in den Ausführungsformen gemäß Figur 1b) oder 2b) die Beschichtung, die das Molsieb enthält, vom anströmenden Abgas zuerst kontaktiert wird.

Welche konkrete Ausgestaltung des Katalysators zu wählen ist, um ein möglichst optimales Abgasreinigungsergebnis zu erzielen, hängt von den Betriebsbedingungen des Katalysators in der Zielanwendung ab und kann nach einer Evaluierung durch den Fachmann mit den ihm bekannten Standardmethoden festgelegt werden.

Die Katalysatoren zeichnen sich durch hohe NO$_x$-Konvertierungsraten im Temperaturbereich von über 350°C bei zugleich hervorragender Selektivität zu Stickstoff aus. Im Bereich von unter 350°C, insbesondere im Tieftemperaturbereich zwischen 150 und 250°C werden Aktivitätseinbußen im Vergleich zu herkömmlichen Katalysatoren nur in geringem Umfang beobachtet.

Die Erfindung wird nachfolgend mittels Figuren und Beispielen weitergehend erläutert. Es zeigen

Figur 1: Ausführungsformen erfindungsgemäß zu verwendender Zonenkatalysatoren, wobei (A) die katalytisch aktive Beschichtung darstellt, die das Mischoxid enthält, während (B) eine davon räumlich getrennte, katalytisch aktive Beschichtung darstellt, welche ein Molsieb enthält; gezeigt wird schematisch ein Ausschnitt aus einem monolithischen Durchflusswabenkörper, dessen Strömungs-kanäle durch gasundurchlässige Wände getrennt sind, auf denen die katalytisch aktiven Beschichtungen (A) und (B) aufgebracht sind.

Figur 2: Ausführungsformen erfindungsgemäß zu verwendender Schichtkatalysatoren, wobei (A) die katalytisch aktive Beschichtung darstellt, die das Mischoxid enthält, während (B) eine davon räumlich getrennte, katalytisch aktive Beschichtung darstellt, welche ein Molsieb enthält; gezeigt wird schematisch ein Ausschnitt aus einem monolithischen Durchflusswabenkörper, dessen Strömungs-kanäle durch gasundurchlässige Wände getrennt sind, auf denen die katalytisch aktiven Beschichtungen (A) und (B) aufgebracht sind.

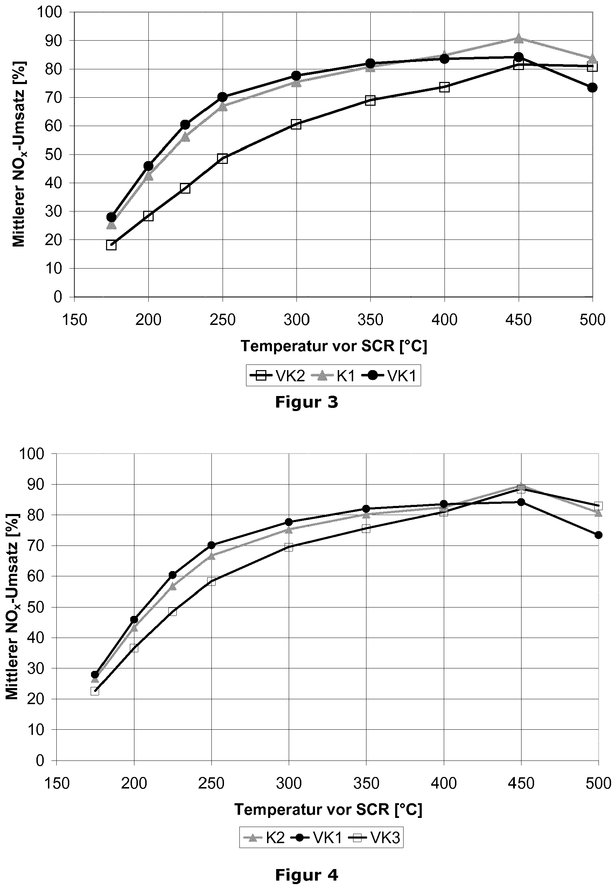

Figur 3: Vergleich der Stickoxid-Umsätze in der SCR-Reaktion zwischen dem Katalysator K1 und den Vergleichskatalysatoren VK1 und VK2.

Figur 4: Vergleich der Stickoxid-Umsätze in der SCR-Reaktion zwischen dem Katalysator K2 und den Vergleichs-katalysatoren VK1 und VK3.

Zur Herstellung der in den nachstehenden Beispielen beschriebenen Katalysatoren wurden Molsieb und Mischoxid, je nach Ausführungsform gemischt oder getrennt, in Wasser suspendiert, gemahlen und auf einen keramischen Wabenkörper mit einem Volumen von 0,5 L und einer Zellzahl von 62 Zellen pro Quadratzentimeter bei einer Wandstärke von 0,17 mm in einer oder mehreren Schichten bzw. in Zonen aufgebracht. Nach Kalzination des Wabenkörpers bei 500°C für die Dauer von zwei Stunden in Luft wurden dem beschichteten Wabenkörper zylinderförmige Bohrkerne für die Testung in einer Modellgasanlage mit einem Durchmesser von 25,4 mm und einer Länge von 76,2 mm entnommen.

Zur Untersuchung der katalytischen Aktivität der hergestellten Trägerkatalysatoren wurde ein dynamischer Aktivitätstest in einer Labormodellgasanlage vorgenommen. Dabei wurde die folgende Testgaszusammensetzung eingestellt:

| Gasmischung Bestandteil | Gasmischung 1 | Gasmischung 2 | Gasmischung 3 |
|---|---|---|---|
| $O_2$ [Vol.-%]: | 10 | 10 | 10 |
| NO [Vppm]: | 500 | 500 | 0 |
| $NH_3$ [Vppm]: | 0 | 750 | 0 |
| CO [Vppm]: | 350 | 350 | 350 |
| $C_3H_6$ [Vppm]: | 100 | 100 | 100 |
| $H_2O$ [Vppm]: | 5 | 5 | 5 |
| $N_2$ [Vol.-%]: | Rest | Rest | Rest |
| Raumgeschwindigkeit [$h^{-1}$] | 60000 | 60000 | 60000 |

Der Test wurde bei drei verschiedenen Temperaturen durchgeführt, die auf den anwendungsrelevantesten Zieltemperaturbereich für ein SCR-System, das in einer Abgasanlage anderen Abgasreinigungsaggregaten nachgeschaltet ist, abgestimmt waren, nämlich bei 175°C, 250°C und 300°C. Bei jeder Temperatur wurde ein Zyklus aus vier unterschiedlichen Phasen durchlaufen, die nachfolgend als Phasen A bis D bezeichnet werden:

Phase A: Gasmischung 1; Dauer: 5 Minuten

Phase B, NH3-SCR-Phase: Gasmischung 2; Dauer: bis zu einem NH3-Durchbruch von 20 Vppm oder Abbruch nach Zeit;

Phase C, Gasmischung 3; Leeren des NH3-Speichers durch Temperaturrampe bis 500°C:

Phase D, Gasmischung 3; Einregeln der nächsten Meßtemperatur

Innerhalb eines Zyklus wurde zuerst die Katalysatortemperatur auf die definierte Zieltemperatur eingeregelt. Dann wurde der Katalysator für 5 Minuten mit Gasmischung 1 beaufschlagt (Phase A). In Phase B wurde auf Gasmischung 2 umgeschaltet, um den NH$_3$-SCR-Umsatz zu ermitteln. Diese Phase wurde entweder bei Detektion eines NH$_3$-Durchbruchs von 20 Vppm abgebrochen oder durch ein zuvor festgelegtes Zeitkriterium beendet. Dann wurde Gasmischung 3 eingestellt und der Katalysator auf 500°C aufgeheizt, um den Ammoniakspeicher zu entleeren (Phasen C). Anschließend wurde der Katalysator auf die nächste zu untersuchende Messtemperatur heruntergekühlt (Phasen D), der nächste Zyklus begann mit Phase A durch Einstellen der Gasmischung 1 nach Einregeln der Zieltemperatur. Der dynamische NO$_x$-Umsatz wurde für alle drei Messtemperaturen aus den während Phase B ermittelten Konzentrationen der entsprechenden Abgaskomponenten vor und nach Katalysator ermittelt. Hierzu wurde ein mittlerer NO$_x$-Umsatz über diese Phase unter Berücksichtigung der N$_2$O-Bildung wie folgt berechnet:

$$U_{mittel,N_2O\,korr} = \left[ 1 - \frac{c_{NO_x,mittel}^{nachKat} + 2 \cdot c_{N_2O,mittel}^{nachKat}}{c_{NO_x,mittel}^{vorKat} + 2 \cdot c_{N_2O,mittel}^{vorKat}} \right] \cdot 100\%$$

Die erhaltenen Stickoxid-Umsatz-Werte $U_{NOx}$ [%] wurden zur Beurteilung der SCR-Aktivität der untersuchten Materialien als Funktion der vor Katalysator gemessenen Temperatur aufgetragen.

Folgende Katalysatoren wurden hergestellt:

Vergleichsbeispiel 1: Vergleichskatalysator VK1

Es wurde eine Beschichtungssuspension durch Suspendieren von kommerziell erhältlichem SAPO-34 in Wasser und Zugabe einer wässrigen Kupfer(II)-nitratlösung hergestellt. Die zugegebene Menge der Kupfernitratlösung wurde so berechnet, das der fertige Katalysator 2 Gew.-% Cu, bezogen auf das Gesamtgewicht der ausgetauschten SAPO-34, enthielt. Die Suspension wurde zur Vervollständigung des Ionenaustausches 30 Minuten gerührt und dann nach Zugabe von Silica-Sol als Binder direkt auf einen keramischen Durchflusswabenkörper mit 62 Zellen pro Quadratzentimeter und einer Zellwandstärke von 0,165 Millimetern, der einen Durchmesser von 92,96 Millimeter und eine Länge von 76,2 Millimeter aufwies, aufgebracht. Die aufgebrachte Menge betrug 139,1 g/L. Der so beschichtete Wabenkörper wurde bei 90°C getrocknet, bei 350°C kalziniert und 2 Stunden bei 640° an Luft getempert.

Beispiel 1: Katalysator K1

Im ersten Schritt wurde analog zum Vorgehen bei der Herstellung von VK1 eine Schicht aus Cu-ausgetauschtem SAPO-34 in einer Menge von 139,1 g/L aufgebracht. Auf diesen Katalysator wurde im zweiten Schritt ein Mischoxid bestehend aus 15 Gew.-% $WO_3$, 46,75 Gew.-% $ZrO_2$, 27,2 Gew.-% $CeO_2$, 5,1 Gew.-% $Y_2O_3$ und 5,95 Gew.-% $Nb_2O_3$ in einer Menge von 15,9 g/L aufgebracht, so dass ein geschichteter Katalysator gemäß Figur 2a erhalten wurde mit dem Cu-Molsieb in der Unterschicht und der Mischoxidkomponente in der oberen Schicht.

Vergleichsbeispiel 2: Vergleichskatalysator VK2

Das in Beispiel 1 beschriebene verfahren wurde wiederholt mit dem Unterschied, dass im zweiten Schritt das Mischoxid in einer Menge von 63,4 g/L aufgebracht wurde.

Die Washcoatbeladungen der verschiedenen Schichten bei K1, VK1 und VK2 waren somit wie folgt:

| | Cu-SAPO-34-Beladung der unteren Schicht [g/L] | Mischoxid-Beladung der oberen Schicht [g/L] |
|---|---|---|
| VK2 | 139.1 | 63.4 |
| K1 | 139.1 | 15.9 |
| VK1 | 139.1 | 0 |

Aus den Katalysatoren K1, VK1 und VK2 wurde jeweils ein Bohrkern mit 25.4 mm Durchmesser und 76.2 mm Länge entnommen, 16h bei 750°C in einem Gasgemisch aus 10% $H_2O$, 10% $O_2$, Rest $N_2$ hydrothermal gealtert und anschließend im dynamischen Aktivitätstest vermessen.

Die Ergebnisse sind aus Figur 3 ersichtlich. Demnach zeigt der Katalysator K1 bei Temperaturen über 350°C im Vergleich zu den Vergleichskatalysatoren VK1 und VK2 eine deutlich bessere $NO_x$-Konvertierungsaktivität. Bei Temperaturen unter 350°C ist K1 etwa gleich aktiv wie VK1 und deutlich aktiver wie VK2.

Beispiel 2: Katalysator K2

Es wurden eine gemischte Beschichtungssuspension aus Cu-SAPO-34 (2% Cu, bezogen auf das Gesamtgewicht des ausgetauschten SAPO-34) und einer Mischoxidkomponente bestehend aus 15 Gew.-% $WO_3$, 46,75 Gew.-% $ZrO_2$, 27,2 Gew.-% $CeO_2$, 5,1 Gew.-% $Y_2O_3$ und 5,95 Gew.-% $Nb_2O_3$, hergestellt. Das Verhältnis von Cu-SAPO-34 zu Mischoxid in der Suspension betrug 8,7 : 1. Diese Suspension wurden zur Beschichtung von keramischen Durchflußwabenkörper mit 62 Zellen pro Quadratzentimeter, einer Zellwandstärke von 0,165 Millimetern, einem Durchmesser von 92,96 Millimeter und eine Länge von 76,2 Millimeter verwendet. Der so beschichtete Wabenkörper wurde bei 90°C getrocknet, bei 350°C kalziniert und 2 Stunden bei 640° an Luft getempert. Die Washcoatbeladung an Cu-SAPO-34 auf dem fertigen Katalysator K3 betrug 139.1 g/L, die Washcoatbeladung an Mischoxid 15,9 g/L.

Vergleichsbeispiel 3: Vergleichskatalysator VK3

Analog zum Vorgehen bei der Herstellung von K2 gemäß Beispiel 2 wurde der Mischkatalysator VK3 präpariert. Das Verhältnis von Cu-SAPO-34 zu Mischoxid in der Suspension betrug in diesem Fall 2,2 : 1. Die Washcoatbeladung an Cu-SAPO-34 auf dem fertigen Katalysator VK3 betrug 139.1 g/L, die Washcoatbeladung an Mischoxid 63.4 g/L.

Aus den Katalysatoren K2 und VK3 wurde jeweils ein Bohrkern mit 25.4 mm Durchmesser und 76.2 mm Länge entnommen, 16h bei 750°C in einem Gasgemisch aus 10% $H_2O$, 10% O2, Rest N2 hydrothermal gealtert und anschließend im dynamischen Aktivitätstest vermessen und mit dem Ergebnis von VK1 verglichen.

Die Ergebnisse sind aus Figur 4 ersichtlich. Demnach zeigt der Katalysator K2 bei Temperaturen über 350°C im Vergleich zum Vergleichskatalysator VK1 eine deutlich bessere $NO_x$-Konvertierungsaktivität. Vergleichskatalysator VK3 ist bei diesen Temperaturen zwar vergleichbar, bei Temperaturen unter 350°C aber deutlich schlechter. K2 und VK1 sind bei diesen Temperaturen vergleichbar.

Analog zu den vorstehenden Beispielen 1 und 2 können Katalysatoren auch erhalten werden, wenn die dort genannten Mischoxide durch die nachfolgend mit a bis i bezeichneten Mischoxide ersetzt werden. Sie zeichnen sich ebenfalls durch gute $NO_x$-Konvertierungseigenschaften aus.

| Mischoxid | $CeO_2$ [Gew.-%] | $Nb_2O_5$ [Gew.-%] | $SE_2O_3$/ [Gew.-%] | $ZrO_2$ [Gew.-%] |
|---|---|---|---|---|
| a | 38 | 14,5 | $Nd_2O_3$/4,5 | 43 |
| b | 38 | 14,5 | $Y_2O_3$/4,5 | 43 |
| c | 38 | 14,5 | $La_2O_3$/4,5 | 43 |
| d | 25 | 15 | $Y_2O_3$/10 | 50 |
| e | 45 | 15 | $Nd_2O_3$/10 | 30 |
| f | 45 | 3 | $Nd_2O_3$/9 | 43 |
| g | 40 | 15 | $Y_2O_3$/3 | 42 |
| h | 35 | 10 | $Nd_2O_3$/6 | 49 |
| i | 50 | 20 | $Y_2O_3$/5 | 25 |

**Patentansprüche**

1. Verfahren zur selektiven katalytischen Reduktion von Stickoxiden in Abgasen von Dieselmotoren, durch

- Hinzufügen von Ammoniak oder einer Vorläuferverbindung, aus der Ammoniak gebildet werden kann, aus einer vom Motor unabhängigen Quelle in das Stickoxide enthaltende, zu reinigende Abgas und
- Überleiten der in Schritt a.) erzeugten Mischung über einen Katalysator, **dadurch gekennzeichnet, dass** der Katalysator

a) eine Molsieb ausgewählt aus der Gruppe bestehend aus Chabazit, SAPO-34 und ALPO-34, der 1 bis 10 Gew.-% Kupfer, bezogen auf das Gesamtgewicht des Zeolithen enthält; und
b) ein Mischoxid, das aus

Oxiden des Cers, des Zirkons, des Niobs und eines oder mehrerer Seltenerdelemente oder aus Oxiden des Cers, des Zirkons, des Niobs, des Wolframs und eines oder mehrerer Seltenerdelemente besteht; enthält
wobei das Gewichtsverhältnis zwischen Molsieb und Mischoxid 3:1 bis 10:1 beträgt.

**Claims**

1. Method for the selective catalytic reduction of nitrogen oxides in exhaust gases of diesel engines by

- adding ammonia, or a precursor compound from which ammonia can be formed, from a source independent of the engine into the exhaust gas which contains nitrogen oxides and which is to be cleaned and
- passing the mixture produced in step a.) over a catalyst,

**characterized in that** the catalyst contains

a) a molecular sieve selected from the group consisting of chabazite, SAPO-34 and ALPO-34, which contains 1 to 10 wt.% copper in relation to the total weight of the zeolite; and
b) a mixed oxide consisting of
oxides of cerium, zirconium, niobium and one or more rare earth elements, or consisting of
oxides of cerium, zirconium, niobium, tungsten and one or more rare earth elements;
wherein the weight ratio between the molecular sieve and the mixed oxide is 3:1 to 10:1.

**Revendications**

1. Procédé pour la réduction catalytique sélective d'oxydes d'azote dans les gaz d'échappement de moteurs diesel, par

- ajout d'ammoniac ou d'un composé précurseur à partir duquel de l'ammoniac peut être formé, provenant d'une source indépendante du moteur, dans les gaz d'échappement à épurer contenant des oxydes d'azote et
- passage du mélange généré à l'étape a.) par un catalyseur,

**caractérisé en ce que** le catalyseur contient

a) un tamis moléculaire choisi dans le groupe constitué de la chabazite, du SAPO-34 et de l'ALPO-34, qui contient 1 à 10 % en poids de cuivre, par rapport au poids total de la zéolithe ; et
b) un oxyde mixte, qui se compose
d'oxydes du cérium, du zircon, du niobium et d'un ou de plusieurs éléments des terres rares ou
d'oxydes du cérium, du zircon, du niobium, du tungstène et d'un ou de plusieurs éléments des terres rares ;
le rapport du poids entre le tamis moléculaire et l'oxyde mixte étant de 3:1 à 10:1.

(A)    (B)

(B)    (A)

**Figur 1**

(A)

(B)

(B)

(A)

**Figur 2**

**Figur 3**

**Figur 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4961917 A
- EP 1495804 A1
- US 6914026 B2
- EP 1147801 B1
- EP 385164 B1
- EP 1153648 A1
- EP 246859 A1
- WO 2008049491 A
- WO 2008051752 A
- EP 2116293 A1
- EP 2072120 A1
- US 6468941 B1
- US 2003073566 A